# EUROPÄISCHE PATENTANMELDUNG

(11) **EP 1 002 841 A2**
(43) Veröffentlichungstag der Anmeldung: **24.05.2000**
(21) Anmeldenummer: 99250389.6
(22) Anmeldetag: 03.11.1999
(51) Int. Cl.: C09D 11/16, C09D 11/02

(54) **Antiverschleissadditiv für Tinten und das Additiv enthaltende Tintenzusammensetzung**

(30) Priorität: 20.11.1998 DE 19855014
(71) Anmelder: rotring international GmbH & Co KG, 22525 Hamburg (DE)
(72) Erfinder: Piel, Merten, 22769 Hamburg (DE)
(74) Vertreter: UEXKÜLL & STOLBERG

(57) **Zusammenfassung**

Die vorliegende Erfindung betrifft die Verwendung eines Pigments oder einer Mischung von Pigmenten als Antiverschleißadditiv in Tintenzusammensetzungen. Die Erfindung betrifft ferner eine Tintenzusammensetzung, die dadurch gekennzeichnet ist, daß sie, bezogen auf das Gesamtgewicht der Zusammensetzung, entweder weniger als 0,1 Gew.-% Rußpigment (a) oder weniger als 1 Gew.-% organisches Pigment (b) oder weniger als 1 Gew.-% einer Mischung der Pigmente (a) und (b) enthält, wobei der Gehalt der Komponente (a) in der Tintenzusammensetzung weniger als 0,1 Gew.-% ist.

## Beschreibung

Die Erfindung betrifft die Verwendung von Pigmenten als Antiverschleißadditiv in Tintenzusammensetzungen. Die Erfindung betrifft ferner Tintenzusammensetzungen für Schreibgeräte und Druckvorrichtungen, insbesondere für Schreibgeräte mit Needlepoint- oder Rollerballspitzen.

Beim Gebrauch von Schreibgeräten, insbesondere beim Gebrauch von Schreibgeräten mit Needlepoint- oder Rollerballspitzen, kann es häufig schon nach relativ geringer Schreiblänge zum Auftreten von Verschleiß kommen, wenn handelsübliche Tinten verwendet werden. Verschleiß heißt in diesem Zusammenhang, daß das Problem der Kugelretraktion auftritt, d.h. die Kugel in der Schreibspitze wandert in das Kugelbett ein. Dadurch wird zum einen das Schreibgefühl deutlich schlechter, zum anderen kann es dazu kommen, daß der freie Querschnitt der Kapillaren im Kugelbett verkleinert wird bzw. vollständig verschlossen wird. Dies führt zur Reduzierung des Tintenflusses bis hin zum Totalausfall des Schreibgerätes. Beispielsweise in Schreibgeräten mit einer (Edelstahl-)Needlepointspitze mit Wolframcarbidkugel von z.B. 0,7 mm Durchmesser und Gebrauch einer üblich aufgebauten Farbstofftinte kann dieser Effekt typischerweise nach etwa 200 bis 400 m Schreiblänge auftreten.

Es wurden daher zur Verminderung der Verschleißerscheinungen schon eine Reihe von Lösungsvorschlägen gemacht. Die meisten dieser Ansätze beinhalten die Zugabe von Additiven, die aufgrund ihrer tensidähnlichen Eigenschaften an den Grenzflächen von Kugel und Kugelbett des Schreibgeräts adsorbiert werden und diese so gegen Verschleiß schützen sollen. Ferner werden häufig feste "Schmiermittel" in Form von Wachs oder Kunstharzdispersionen bzw. in Form von bekannten Feststoffschmiermitteln wie Molybdändisulfid oder Graphit beschrieben. Auch wird die gezielte chemische Modifikation der Oberfläche von Rußpigmenten beschrieben, um so die hohe Verschleißneigung speziell dieser Pigmentklasse zu verringern.

Die JP-A-61200183 offenbart eine Tintenzusammensetzung auf Wasserbasis für Kugelschreiber, die mehr als 3 Gew.-% Rußpigment, dessen Oberfläche durch adsorbiertes Phthalocyanin modifiziert ist, um den zuvor gefundenen Verschleiß zu reduzieren, und ein Schutzkolloid enthält. Das Rußpigment und das Phthalocyanin getrennt werden als nicht verschleißmindernd beschrieben.

Die JP-A-02199182 beschreibt eine Pigmenttinte für Kugelschreiber, die mit Schmiermitteln wie Molybdändisulfid modifiziertes, d.h. damit verbundenes Pigment verwendet, um die Verschleißwirkung des Pigments zu vermindern.

Die DE 36 25 557 offenbart eine Farbzusammensetzung auf Wasserbasis für einen Kugelschreiber, die zwar Pigmente als farbgebende Mittel umfaßt, bei der jedoch als verschleißminderndes Additiv ein spezielles Aminsalz von N-Acylsarcosin verwendet wird. Pigmente werden in den beschriebenen Tintenzusammensetzungen in Mengen von mehr als 5 Gew.-% eingesetzt.

Die EP-A-0 675 181 offenbart eine wäßrige Tintenzusammensetzung für Kugelschreiber, die verbesserte Schmierfähigkeit aufweist. Die Zusammensetzung umfaßt ein Färbungsmittel, ein Dispergiermittel, ein wasserlösliches organisches Lösungsmittel, Wasser und ein spezielles Derivat einer Phosphorsäure. Pigmente werden vorzugsweise in Mengen von 1 bis 30 Gew.-% verwendet. Es ist offenbart, daß bei niedrigeren Pigmentkonzentrationen die Tintendichte auf dem Papier in unerwünschter Weise reduziert ist.

Die der Erfindung zugrundeliegende Aufgabe besteht darin, eine verbesserte Tintenzusammensetzung zur Verfügung zu stellen, die aus Schreibgeräten oder Druckvorrichtungen wie Plottern auf das zu beschreibende Substrat aufgebracht werden kann, eine Vielzahl von Rezepturen umfassen kann, ein verbessertes Verschleißverhalten zeigt und somit zu deutlich verbesserten Schreiblängen bzw. Drucklängen führt, wenn sie in Schreibgeräten wie solchen mit Rollerball- oder Needlepointspitze oder Federhaltern verwendet wird.

Die erfindungsgemäße Aufgabe wird dadurch gelöst, daß ein Pigment oder eine Mischung von Pigmenten als Antiverschleißadditiv in Tintenzusammensetzungen verwendet wird.

Ein weiterer Gegenstand der Erfindung ist eine Tintenzusammensetzung, die dadurch gekennzeichnet ist, daß sie bezogen auf das Gesamtgewicht der Zusammensetzung entweder weniger als 0,1 Gew.-% Rußpigment (a) oder weniger als 1 Gew.-% organisches Pigment (b) oder weniger als 1 Gew.-% einer Mischung der Pigmente (a) und (b) enthält, wobei der Gehalt der Komponente (a) in der Tintenzusammensetzung weniger als 0,1 Gew.-% ist.

Die Erfindung betrifft ferner die Verwendung derartiger Tintenzusammensetzungen in Schreibgeräten und Druckvorrichtungen.

Bevorzugte Ausführungsformen sind Gegenstand der Unteransprüche.

Das Antiverschleißadditiv bzw. -pigment wird im folgenden auch als Additiv oder erfindungsgemäßes Additiv bezeichnet.

Überraschenderweise wurde gefunden, daß durch den Einsatz von auch schon geringsten Mengen dispergier-ter Pigmente wie Ruß, insbesondere Farbruß, Furnace-Ruß, Gasruß und/oder Flammruß und/oder organischer Buntpigmente wie solche vom Azo- und/oder Phthalocyanin-Typ in ansonsten üblichen Tinten, insbesondere Farbstofftinten, das Verschleißverhalten drastisch verbessert werden kann. Dies ist insbesondere deshalb überraschend, weil Pigmente in Tinten in der Regel als Auslöser von Verschleiß angesehen werden.

Die Erfindung besteht also in dem Zusatz von vorzugsweise geringen Mengen dispergierter Pigmente zu einer ansonsten üblichen Tinte, beispielsweise einer Farbstofftinte, die aus Schreibgeräten oder Druckvorrichtungen wie Plottern verschrieben werden. Dies können beispielsweise Schreibgeräte mit Needlepoint- oder Rollerballspitzen oder Federhalter sein.

Das Additiv wird, jeweils bezogen auf das Gesamtgewicht der Tintenzusammensetzung, im allgemeinen in Konzentrationen größer als 0,001 Gew.-%, vorzugsweise in Konzentrationen größer als 0,005 Gew.-%, beispielsweise 0,005 bis 5 Gew.-%, vorzugsweise 0,005 bis 0,5 Gew.-%, und insbesondere in Konzentrationen von 0,005 bis 0,1 Gew.-% verwendet. Beispielsweise kann Rußpigment in Konzentrationen von weniger als 0,1 Gew.-% verwendet werden. Organisches Buntpigment kann beispielsweise in Konzentrationen von weniger als 1 Gew.-% verwendet werden. Alternativ kann auch eine Mischung von Rußpigment und organischem Buntpigment in einer Konzentration von weniger als 1 Gew.-% verwendet werden, wobei die Konzentration des Rußpigments in der Zusammensetzung weniger als 0,1 Gew.-% ist.

Die mittlere Teilchengröße des Additivs beträgt im allgemeinen 10 bis 500 nm, vorzugsweise 10 bis 100 nm und insbesondere 30 bis 60 nm. Mittlere Teilchengröße bedeutet in diesem Fall D₅₀-Wert, d.h. 50 % der Pigmentteilchen sind kleiner, 50 % sind größer als der D₅₀-Wert.

Zur Charakterisierung des Antiverschleißadditives kann man auch die Größe der Primärteilchen angeben. Primärteilchen sind die mit elektronenmikroskopischen Methoden zu erkennenden kleinsten Pigmentteilchen eines bestimmten Pigments, beispielsweise von Ruß. Beispielsweise kann das Additiv Gasruß mit einer mittleren Primärteilchengröße von 10 bis 30 nm, Furnace-Ruß mit einer mittleren Primärteilchengröße von 15 bis 60 nm und/oder Flammruß mit einer Primärteilchengröße von etwa 100 nm umfassen. Bezogen auf die durchschnittliche Größe der Primärteilchen wird das Zahlenmittel angegeben.

Besonders geeignete Additive umfassen:
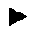 Furnace-Ruß der (oder vergleichbar mit) Klasse MCF (MCF = Medium Channel Furnace) mit einer einer DBP-Absorption von 45 bis 50 ml/100 g, einer mittleren Primärteilchengröße von 15 bis 20 nm und einer B.E.T.-Oberfläche von 180 bis 220 m²/g,
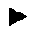 Gasruß der Klasse (oder vergleichbar mit) HCC (HCC = High Color Channel) mit einer Schwarzzahl von 260 bis 300, einer mittleren Primärteilchengröße von 10 bis 16 nm und einer B.E.T.-Oberfläche von 300 bis 340 m²/g und/oder
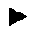 Gasruß der Klasse (oder vergleichbar mit) RCC (RCC = Regular Color Channel) mit einer Schwarzzahl von 240 bis 250, einer mittleren Primärteilchengröße von 20 bis 30 nm und einer B.E.T.-Oberfläche von 80 bis 120 m²/g.

Als ein besonders wirksames Antiverschleißadditiv hat sich Farbruß erwiesen, der eine besonders deutliche Verbesserung des Verschleißverhaltens erzielt. Dies beruht unter anderem wahrscheinlich auf der geringen Primärteilchengröße und der annähernd kugelartigen Form der Pigmentteilchen dieses Rußtyps.

Es sind somit Pigmente bevorzugt, die annährend kugelförmige Gestalt aufweisen. Überdies ist es vorteilhaft, wenn die Primärteilchen des erfindungsgemäßen Additives eine enge Teilchengrößenverteilung bei geringer mittlerer Teilchengröße wie oben angegeben aufweisen.

Als Beispiele für besonders bevorzugte Antiverschleißpigmente seien der Furnaceruß Printex 85 und die Gasruße Farbruß FW 1 und Printex U genannt (Handelsproduktbezeichnungen der Firma Degussa AG).

Erfindungsgemäß geeignetes Additiv kann auch in Form von hydrophilen Pigmentpräparationen ("Pigmentfeinteig") verwendet werden. Ein für die erfindungsgemäße Verwendung geeigneter Pigmentfeinteig ist beispielsweise Hostafine Schwarz T der Firma Hoechst AG (Clariant AG), der den Farbruß Printex 85 der Firma Degussa AG enthält. Printex 85 ist ein Furnace-Ruß mit einer DBP-Absorption von ca. 48 ml/100 g und einer mittleren Primärteilchengröße von ca. 16 nm. Der Pigmentfeinteig weist einen D₅₀-Wert von 0,049 um, einen Pigmentgehalt von ca. 30 %, eine Dichte von 1,21 g/cm³ und eine Oberflächenspannung von 55 mN/m auf. Die Mindestkonzentration, in der der Pigmentfeinteig verwendet werden kann, beträgt etwa 0,02 Gew.-%, was etwa 0,006 Gew.-% Ruß, bezogen auf die Tintenzusammensetzung, entspricht. Bei anderen Pigmentsorten wie organischen Pigmenten können allerdings deutlich höhere Konzentrationen zur Erzielung des erfindungsgemäßen Effekts notwendig sein.

Der Pigmentanteil kann somit erhöht werden (bis hin zu einer reinen Pigmenttinte), jedoch wird der größte Vorteil hinsichtlich des Verschleißverhaltens der Tinte beim Einsatz von geringen Mengen wie oben definiert erzielt. Insbesondere besteht beim Einsatz geringer Mengen wie zuvor beschrieben der Vorteil einer großen Rezeptierungsfreiheit hinsichtlich der übrigen Komponenten der Tintenzusammensetzung wie Lösungsmittel, Farbstoffe, weitere Pigmente, Feuchthaltemittel, Tenside etc.

Bei den Tintenzusammensetzungen, in denen die erfindungsgemäßen Additive verwendet werden, kann es sich um Tinten auf Wasser-, Lösungsmittel- oder Ölbasis handeln. Die Tintenzusammensetzungen können neben dem Antiverschleißadditiv weitere für Tinten übliche Zusatzstoffe umfassen. Hierzu gehören beispielsweise weitere Pigmente, wasser- oder öllösliche Farbstoffe, mit Wasser mischbare organische Lösungsmittel, Dispergiermittel, wasserlösliche Bindemittel, pH-Regulatoren, Konservierungsmittel, Tenside und sonstige weitere Hilfsmittel.

Die vorliegende Erfindung stellt ferner eine Tintenzusammensetzung zur Verfügung, die, bezogen auf das Gesamtgewicht der Zusammensetzung, entweder weniger als 0,1 Gew.-% Rußpigment (a) oder weniger als 1 Gew.-% organisches Pigment (b) oder weniger als 1 Gew.-% einer Mischung der Pigmente (a) und (b) enthält, wobei der Gehalt der Komponente (a) in der Tintenzusammensetzung weniger als 0,1 Gew.-% ist.

Bevorzugte Pigmente (a) sind Farbruße wie Furnace-Ruß, Gasruß und Flammruß sowie die oben bei der Verwendung als Antiverschleißadditiv beschriebenen Rußpigmente.

Bevorzugte Pigmente (b) sind organische Buntpigmente vom Phthalocyanin- und Azo-Typ.

Im allgemeinen enthält die erfindungsgemäße Tintenzusammensetzung bezogen auf das Gesamtgewicht der Zusammensetzung weniger als 0,1 Gew.-% Pigment vom Typ (a). Vorzugsweise enthält die Tintenzusammensetzung bezogen auf das Gesamtgewicht der Zusammensetzung 0,001 bis 0,05 Gew.-%, insbesondere 0,005 bis 0,01 Gew.-% Pigment vom Typ (a).

Im allgemeinen enthält die erfindungsgemäße Tintenzusammensetzung bezogen auf das Gesamtgewicht der Zusammensetzung weniger als 1 Gew.-% Pigment vom Typ (b). Vorzugsweise enthält die Tintenzusammensetzung bezogen auf das Gesamtgewicht der Zusammensetzung 0,01 bis 0,8 Gew.-%, beispielsweise 0,1 bis 0,6 Gew.-%, insbesondere 0,4 bis 0,6 Gew.-%, beispielsweise etwa 0,5 Gew.-% Pigment vom Typ (b).

Für die weiteren Eigenschaften wie Pigmentteilchengröße, -form, - größenverteilung etc. der Pigmente vom Typ (a) und (b) in der erfindungsgemäßen Tintenzusammensetzung gilt das oben bei der Beschreibung der Verwendung des erfindungsgemäßen Antiverschleißaddititves Gesagte. Somit können die Pigmente beispielsweise in Form von sogenannten Rußpräparationen wie oben beschrieben in die Tintenzusammensetzungen eingearbeitet werden.

Es sind solche Tintenzusammensetzungen bevorzugt, die die oben als bevorzugte Antiverschleißadditve beschriebenen Pigmente enthalten.

Die Tintenzusammensetzungen können eine Wasser- , organische Lösungsmittel- oder Ölbasis haben und natürlich weitere übliche Bestandteile wie oben beschrieben aufweisen.

Die erfindungsgemäße Tintenzusammensetzung kann hergestellt werden, indem die einzelnen Bestandteile in beliebiger Reihenfolge, wobei vorzugsweise Wasser bzw. Lösungsmittel vorgelegt wird, miteinander vermischt werden. Das Pigment wird üblicherweise als vorher dispergierte Präparation zugegeben. Hierzu werden in der Regel Dissolver und Perlmühlen eingesetzt.

Die erfindungsgemäße Tintenzusammensetzung kann vorteilhaft in Schreibgeräten und Druckvorrichtungen verwendet werden und ist insbesondere für Schreibgeräte mit Needlepoint- oder Rollerballspitzen, Federhalter und Plotterstifte geeignet.

Die folgenden Beispiele illustrieren die vorliegende Erfindung.

### Beispiele

Die Rezepturen der Tinten, in denen die Antiverschleißpigmente erfindungsgemäß verwendet wurden, waren grundsätzlich wie folgt:

Komponente (Gehalt in Gew.-%):
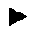 Hauptlösungsmittel wie Wasser (>50)
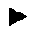 weitere mischbare Lösungsmittel wie Glycerin (ca. 10 bis 30)
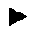 Feuchthaltemittel wie Harnstoff(-derivate) (ca. 2 bis 10)
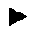 Farbmittel wie Farbstoffe (Säure-, Direkt-, basische Farbstoffe) und Pigmente (Azo-, Phthalocyanin-, Ruß-, Titandioxid-, Fe-Oxid-Pigmente) (ca. 0,1 bis 20)
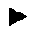 optional Bindemittel wie Polyacrylate, Schellack (ca. 0,5 bis 5)
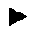 Netzmittel wie Polyglykolether(-derivate) (nicht-, an- oder kationisch, amphoter) (ca. 0,1 bis 1)
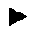 pH-Regulatoren wie Triethanolamin (ca. 0,1 bis 1)
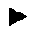 Konservierungsmittel wie Isothiazolon-Lösungen (ca. 0,1 bis 0,5)
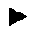 Korrosionsschutzmittel wie organische Phosphorsäureester

### Vergleichsbeispiel

Als Vergleichsbeispiele, die herkömmliches Verschleißverhalten zeigten, dienten zwei Needlepointtintenrezepturen auf Farbstoff-Basis (Tabelle 1):

**Tabelle 1**

| Komponente | Hersteller | chem. Zusammensetzung | Basis-Rezeptur 1 schwarz | Basis-Rezeptur 2 blau |
|---|---|---|---|---|
| | | | Gew.-% | Gew.-% |
| Wasser | | deion. Wasser | 60,3 | 75,2 |
| Diethylenglykol | | | 16,0 | 10,0 |
| Glyzerin | | | | 6,0 |
| Harnstoff | | | 4,0 | 4,0 |
| Bayscript® Schwarz SP, fl. | Bayer AG | Lösung von Azo-Farbstoffen in Wasser | 18,0 | |
| Duasyn® Säureblau AE 85 | Hoechst AG (neu: Clariant GmbH) | C.I. Acid Blue 9 | | 1.5 |
| Duasyn® Säurehodamin B 01 | Hoechst AG (neu: Clariant GmbH) | C.I. Acid Red 52 | | 1,5 |
| Surfynol® 485 | Air Products | ethoxyliertes Ethindiol | 0,5 | 0,5 |
| Triethanolamin | | | | 0,1 |
| Parmetol® A 23 | Schülke & Mayr | wässerige Lösung von u.a. Isothiazolon-Derivaten* | 0,2 | 0,2 |
| Sandocorin® 8132, fl. | Clariant GmbH | wässerige Lösung von u.a. org. Phosphorsäureestern∗ | 1,0 | 1,0 |
| Summe | | | 100,0 | 100,0 |

| | | | | |
|---|---|---|---|---|
| * genaue Zusammensetzung unbekannt | | | | |

### Beispiel 1

### Erfindungsgemäßes Antiverschleißadditiv

Die Tintenzusammensetzungen aus dem Vergleichsbeispiel, die verschleißend wirkten, wurden durch Zugabe von Antiverschleißpigmenten in feinstdispergierter Form (als Pigmentfeinteig oder Pigmenttinte) modifiziert. Die Ergebnisse sind in Tabelle 2 gezeigt:

**Tabelle 2**

| | Nr. | Rezeptur- Nr. | Basis-Tinte | Antiverschleiß-Pigment | Antiver schleiß-Pigment (Fein teig) | Anti-verschleiß-Pigment (Pigment) | Aus fälle durch Ver schleiß | Leerschreiblänge (Mittel wert) |
|---|---|---|---|---|---|---|---|---|
| | | | | | Gew.-% | ca. Gew.-% | % | m |
| 1 | NP-184 | 9643374 | 1, schwarz | - | - | - | 100 | 300 |
| 2 | NP-165 | 9545386 | 2, blau | - | - | - | 70 | 470 |
| 3 | NP-216 | 86/163.2 | 1, schwarz | P.Bk. 7, Printex@ 85 in Hostafine® Schwarz T | 0,1 | 0,03 | 0 | >1700 |
| 4 | NP-217 | B6/163.3 | 1, schwarz | P.Bk. 7, Printex® 85 in Hostafine@ Schwarz T | 0,4 | 0,12 | 0 | >1600 |
| 5 | NP-215 | 86/161.1 | 1, schwarz | P.Bk. 7, Printex® 85 in Hostafine® Schwarz T | 1,0 | 0,3 | 0 | >1600 |
| 6 | | 9720153 | 1, schwarz | P.Bk. 7, Printex® 85 in Hostafine® Schwarz T | 1,0 | 0,3 | 0 | > 10.000 |
| 7 | WW-5 | IW1/42.5 | 1, schwarz | P.Bk. 7, Farbruß FW1® in ink-jet-Rußkonzentrat | 1,6 | 0,35 | 0 | > 1000 |
| 8 | WW-6 | IW1/42.6 | 1, schwarz | P.Bk. 7, Printex@ U in MF-Tusche-Rußkonzentrat | 1,2 | 0,35 | 0 | > 1000 |
| 9 | NP-285 | 86/166.8 | 2, blau | P. Bk. 7, Printex® in Hostafine® Schwarz T | 0,02 | 0,006 | 40 | 1500 |
| 10 | NP-336 | B6/167.9 | 2, blau | P. Bk. 7, Printer® 85 in Hostafine® Schwarz T | 0,02 | 0,006 | 0 | >1200 |
| 11 | NP-337 | 86/167.10 | 2, blau | P. Bk. 7, Printex® 85 in Hostafine® Schwarz T | 0,04 | 0,012 | 0 | >1100 |
| 12 | NP-338 | B6/167.11 | 2, blau | P. Bk. 7, Printex® 85 in Hostafine® Schwarz T | 0,07 | 0,021 | 0 | >1300 |
| 13 | NP-339 | 86/167.12 | 2, blau | P. Bk. 7, Printex® 85 in Hostafine® Schwarz T | 0,1 | 0,03 | 0 | >1200 |
| 14 | | 9716136 | 2, blau | P. Bk. 7, Printex@ 85 in Hostafine® Schwarz T | 0,1 | 0,03 | 0 | > 10.000 |
| 15 | NP-242 | 86/163.12 | 2, blau | P. Bk. 7, Printex® 85 in Hostafine® Schwarz T | 1,0 | 0,3 | 0 | >1500 |
| 16 | NP-218 | 86/163.4 | 2, blau | P. Bl. 15:3 in Hostafine® Blau B2G und P.V. 23 in Rexonyl® Violett RL-LA | 0,85 und 0,15 | 0,34 und 0,045 | 40 | 1100 |
| 17 | NP-243 | | 2, blau | P. Bl. 15:3 in Hostafine® Blau B2G und P.V. 23 in Rexonyl® Violett RL-LA | 3,4 und 0,6 | 1,36 und 0,18 | 0 | 1700 |
| Printex® und Farbruß FW1®: Handelsproduktbezeichnungen der Degussa AG Hostafine® und Flexonyl®: Handelsproduktbezeichnung der Hoechst AG | | | | | | | | |

Aus den Untersuchungsergebnissen ist zu erkennen, daß bereits geringste Mengen Farbruß (Pigment Black 7 (P.Bk.7)) Antiverschleiß-Wirkung zeigten, die Mindestkonzentration lag etwa bei 0,005 Gew.-%. Beim Einsatz von organischen Buntpigmenten (Pigment Blue 15:3 (P.B1.15:3) und Pigment Violet 23 (P.V.23)) waren deutlich höhere Konzentrationen erforderlich, etwa 0,5 Gew.-% in der Summe. Dies illustriert die besonders guten Antiverschleißeigenschaften von Farbruß.

Die Kennzahlen der eingesetzten Rußtypen waren (Tabelle 3):

**Tabelle 3**

| Handelsname | Klasse | Mittlere Primärteilchengröße | BET-Oberfläche | DBP-Adsorption | Ölbedarf DIN ISO 787/5 | flüchtige Anteile (950°C) | pH-Wert |
|---|---|---|---|---|---|---|---|
| | | nm | m²/g | ml/100g | g/100g | % | |
| Printex® 85 | MCF* | 16 | 200 | 48 | | 1,2 | 9,5 |
| Farbruß FW 1® | HCC* | 13 | 320 | | 920 | 5,0 | 4,5 |
| Printex® U | RCC* | 25 | 100 | | 460 | 5,0 | 4,5 |

| | | | | | | | |
|---|---|---|---|---|---|---|---|
| * MCF: Medium Color Furnace Carbon Black (Furnaceruß) HCC: High Color Channel Carbon Black (Gasruß) RCC: Regular Color Channel Carbon Black (Gasruß) | | | | | | | |

### Prüfmethode:

Die Bestimmung der Leerschreiblängen, die in Tabelle 2 angegeben sind, und des Verschleißverhaltens wurde durch einen maschinellen Schreibtest (Pentest) vorgenommen. Die Maschinenparameter waren:
- Schreibgeschwindigkeit: 6,6m/min
- Papiervorschub: 100 mm/min
- Schreibwinkel: 70°
- Rotation der Halter: 0,2 /mm
- Auflagegewicht: 70 g
- Papier: Baumgartner Testpapier (ISO/DIS 12757)

Es wurden jeweils mindestens 5 Geräte mit Kugelspitzen bestehend aus Edelstahl-Kugelbett und Wolframcarbid-Schreibkugenln mit 0,7 mm Durchmesser getestet. Die Tinte im Tank wurde der Spitze über ein Ausgleichsystem bedarfsgerecht zugeführt (free-ink). Die Füllmenge betrug üblicherweise 1,7 ml (entsprechend ca. 1200-1400 m Leerschreiblänge). In den Fällen mit Schreiblängen > 10.000 m wurde der Tank entsprechend oft nachgefüllt.

Die maximale Leerschreiblänge war erreicht, wenn die Halter eine deutliche, durch Einwandern der Kugel in das Kugelbett hervorgerufene Reduzierung des anfänglichen Tintenverbrauchs zeigten. Der Verschleiß ist dann auch mikroskopisch am verringerten Kugelvorstand zu erkennen.

## Patentansprüche

1. Verwendung eines Pigments oder einer Mischung von Pigmenten als Antiverschleißadditiv in Tintenzusammensetzungen.

2. Verwendung nach Anspruch 1, **dadurch gekennzeichnet**, daß das Pigment Ruß, insbesondere Farbruß, Furnaceruß, Gasruß oder Flammruß, oder organisches Buntpigment, insbesondere vom Azo- oder Phthalocyanin-Typ, oder Mischungen derselben umfaßt.

3. Verwendung nach Anspruch 1 oder Anspruch 2, **dadurch gekennzeichnet**, daß das Additiv bezogen auf das Gesamtgewicht der Tintenzusammensetzung in Konzentrationen größer als 0,001 Gew.-%, vorzugsweise größer als 0,005 Gew.-% und insbesondere in Konzentrationen von 0,005 bis 5 Gew.-% verwendet wird.

4. Verwendung nach einem der vorhergehenden Ansprüche, **dadurch gekennzeichnet**, daß die mittlere Teilchengröße des Additives 10 bis 500 nm, vorzugsweise 10 bis 100 nm und insbesondere 30 bis 60 nm beträgt.

5. Verwendung nach einem der vorhergehenden Ansprüche, **dadurch gekennzeichnet**, daß das Additiv Gasruß mit einer mittleren Primärteilchengröße von 10 bis 30 nm, Furnace-Ruß mit einer mittleren Primärteilchengröße von 15 bis 20 nm und/oder Flammruß mit einer mittleren Primärteilchengröße von etwa 100 nm umfaßt.

6. Verwendung nach einem der vorhergehenden Ansprüche, **dadurch gekennzeichnet**, daß das Additiv das Pigment, insbesondere Ruß, in Form einer hydrophilen Pigmentpräparation (Pigmentfeinteig) umfaßt.

7. Verwendung nach einem der vorhergehenden Ansprüche, **dadurch gekennzeichnet**, daß die Pigmentteilchen annähernd kugelförmige Gestalt und eine enge Teilchengrößenverteilung besitzen.

8. Verwendung nach einem der vorhergehenden Ansprüche, **dadurch gekennzeichnet**, daß das Additiv in einer Tintenzusammensetzung auf Wasser-, Lösungsmittel- oder Ölbasis verwendet wird.

9. Tintenzusammensetzung, **dadurch gekennzeichnet**, daß sie, bezogen auf das Gesamtgewicht der Zusammensetzung, entweder weniger als 0,1 Gew.-% Rußpigment (a) oder weniger als 1 Gew.-% organisches Pigment (b) oder weniger als 1 Gew.-% einer Mischung der Pigmente (a) und (b) enthält, wobei der Gehalt der Komponente (a) in der Tintenzusammensetzung weniger als 0,1 Gew.-% ist.

10. Tintenzusammensetzung nach Anspruch 9, **dadurch gekennzeichnet**, daß das Rußpigment (a) Farbruße, insbesondere Furnace-Ruß, Gasruß oder Flammruß oder Mischungen derselben, und das organische Pigment (b) organische Buntpigmente vom Phthalocyanin- oder Azo-Typ oder Mischungen derselben umfaßt.

11. Tintenzusammensetzung nach Anspruch 9 oder 10, **dadurch gekennzeichnet**, daß sie bezogen auf das Gesamtgewicht der Zusammensetzung 0,001 bis 0,05 Gew.-%, insbesondere 0,005 bis 0,01 Gew.-% Rußigment (a) enthält.

12. Tintenzusammensetzung nach Anspruch 9 oder 10, **dadurch gekennzeichnet**, daß sie bezogen auf das Gesamtgewicht der Zusammensetzung 0,01 bis 0,8 Gew.-%, insbesondere 0,4 bis 0,6 Gew.-%, vorzugsweise etwa 0,5 Gew.-% organisches Pigment (b) enthält.

13. Tintenzusammensetzung nach einem der Ansprüche 9 bis 12, **dadurch gekennzeichnet**, daß das Rußpigment (a) bzw. das organische Buntpigment (b) eine mittlere Teilchengröße von 10 bis 500 nm, vorzugsweise 10 bis 100 nm und insbesondere 30 bis 60 nm aufweisen.

14. Tintenzusammensetzung nach einem der Ansprüche 9 bis 13, **dadurch gekennzeichnet**, daß das Rußpigment (a) Gasruß mit einer mittleren Primärteilchengröße von 10 bis 30 nm, Furnace-Ruß mit einer mittleren Primärteilchengröße von 15 bis 20 nm und/oder Flammruß mit einer mittleren Primärteilchengröße von etwa 100 nm umfaßt.

15. Tintenzusammensetzung nach einem der Ansprüche 9 bis 14, **dadurch gekennzeichnet**, daß die Pigmentteilchen annähernd kugelförmige Gestalt und eine enge Teilchengrößenverteilung besitzen.

16. Tintenzusammensetzung nach einem der Ansprüche 9 bis 15, **dadurch gekennzeichnet**, daß das Rußpigment (a) in Form einer hydrophilen Rußpräparation (Pigmentfeinteig) vorliegt.

17. Tintenzusammensetzung nach einem der Ansprüche 9 bis 16, **dadurch gekennzeichnet**, daß sie auf Wasser-, Lösungsmittel oder Ölbasis hergestellt ist.

18. Verwendung einer Tintenzusammensetzung gemäß einem der Ansprüche 9 bis 17 in Schreibgeräten und Druckvorrichtungen.
